# EUROPÄISCHE PATENTSCHRIFT

(11) **EP 2 512 821 B1**
(45) Veröffentlichungstag und Bekanntmachung des Hinweises auf die Patenterteilung: **05.10.2016**
(21) Anmeldenummer: 10801131.3
(22) Anmeldetag: 15.12.2010
(51) Int. Cl.: B42D 25/36, C09K 11/00, G07D 7/12, B42D 25/378, B42D 25/355

(54) **ECHTHEITSMERKMAL IN FORM VON LUMINESZIERENDEN SUBSTANZEN**
AUTHENTICITY FEATURE IN THE FORM OF LUMINESCENT SUBSTANCES
CARACTÉRISTIQUE D'AUTHENTICITÉ SE PRÉSENTANT SOUS LA FORME DE SUBSTANCES LUMINESCENTES

(30) Priorität: 16.12.2009 DE 102009058669
(43) Veröffentlichungstag der Anmeldung: 24.10.2012
(73) Patentinhaber: Giesecke & Devrient GmbH, 81677 München (DE)
(72) Erfinder: GIERING, Thomas, 85614 Kirchseeon (DE); KERSTEN, Peter, 83620 Feldkirchen Westerham (DE); MAGG, Ulrich, 85232 Feldgeding (DE); GRAUVOGL, Gergor, 82041 Oberhaching (DE)
(86) Internationale Anmeldenummer: PCT/EP2010/007689
(87) Internationale Veröffentlichungsnummer: WO 2011/082794

(56) Entgegenhaltungen:
- FR-A1- 2 554 122
- US-A1- 2008 116 272

## Beschreibung

Die Erfindung betrifft ein Sicherheitselement mit zumindest zwei lumineszierenden Substanzen.

Unter der Bezeichnung "Wertdokument" sind im Rahmen der Erfindung Banknoten, Schecks, Aktien, Wertmarken, Ausweise, Kreditkarten, Pässe und auch andere Dokumente sowie Etiketten, Siegel, Verpackungen oder andere Elemente zur Produktsicherung zu verstehen.

Die Absicherung von Wertdokumenten gegen Fälschung mittels lumineszierender Substanzen ist bereits seit langem bekannt. Die Verwendung von Übergangsmetallen und Seltenerdmetallen als lumineszierende Ionen in Wirtsgittern wurden bereits diskutiert. Solche Ionen haben den Vorteil, dass sie, nach entsprechender Anregung, eine oder mehrere charakteristische schmalbandige Lumineszenzen zeigen, die einen sicheren Nachweis und die Abgrenzung gegenüber anderen Spektren erleichtern. Auch Kombinationen von Übergangsmetallen und/ oder Seltenerdmetallen wurden schon diskutiert. Solche Substanzen haben den Vorteil, dass, zusätzlich zu den obengenannten Lumineszenzen, sogenannte Energietransferprozesse beobachtet werden, die zu komplizierten Spektren führen können. Bei diesen Energietransferprozessen kann ein Ion seine Energie auf ein anderes Ion übertragen und die Spektren können dann aus mehreren schmalbandigen Linien bestehen, die charakteristisch für die beiden Ionen sind.

Ionen mit charakteristischen Eigenschaften, die sich zur Absicherung von Wertdokumenten eignen, sind jedoch in ihrer Zahl beschränkt. Zudem lumineszieren Ionen der Übergangsmetalle und/ oder Seltenerdmetalle bei einer oder mehreren charakteristischen Wellenlängen, die von der Natur des Ions und des Wirtsgitters abhängig sind und vorausgesagt werden können. Auch Energietransferprozesse führen zu diesen charakteristischen Lumineszenzen der beteiligten Ionen.

Bei sämtlichen bekannten Sicherheitselementen und den für die Sicherheitselemente verwendeten lumineszierenden Substanzen wird jedoch für einen Nachweis der Sicherheitselemente bzw. der enthaltenen lumineszierenden Substanzen ausgenutzt, dass deren Emissionen, d. h. deren charakteristische Lumineszenzen, unterscheidbar sind. Insbesondere weisen die Emissionen unterschiedliche Wellenlängen auf, so dass sie über die jeweilige Emissionswellenlänge eindeutig identifiziert werden können. Andere Kriterien können beispielsweise die Abklingzeit der Emission oder deren Intensität sein. Derartige Sicherheitselemente sind beispielsweise aus den Dokumenten WO 2009/136921 A1, WO 2006/024530 A1, WO 2005/035271 A2, WO 81/03508 A1, WO 99/38700 A1, WO 99/38701 A1, WO 99/39051 A1 und DE 30 48 734 A1 bekannt.

Die beschriebenen Sicherheitselemente zum Absichern von Wertdokumenten bestehen aus einzelnen Luminophoren, die sich hinsichtlich ihrer spektralen und/oder zeitlichen Eigenschaften unterscheiden. Die Sicherheitselement werden in verschiedenen Anwendungsformen in und/ oder auf Wertdokumente aufgebracht. Dabei kann eine Kombinationen von Luminophoren verwendet werden. Die Emissionsbanden der verwendeten Luminophore stellen eine Spektralkodierung dar. Mehrere verschiedene Luminophore können zu Systemen kombiniert werden, wobei die einzelnen Systeme unabhängig voneinander sind. Die Emission der verwendeten Luminophore wird auch als Lumineszenz bezeichnet, dies kann Fluoreszenz und/oder, Phosphoreszenz beinhalten.

Die bereits erwähnte begrenzte Anzahl von Luminophoren, die von ihnen emittierte begrenzter Anzahl von unterschiedlichen Spektrallinien, macht es für eine Trennung der unterschiedlichen Luminophore erforderlich, die Emissionen der verwendeten Luminophore so aufeinander abzustimmen, dass sich die Emissionen der verschiedenen Lumineszenzen bei einem Wertdokument nicht überlappen. Damit gibt es nur sehr begrenzte Möglichkeiten, in einem einzelnen Wertdokument verschiedene Luminophore so zu integrieren, dass das Wertdokument sicher von anderen Wertdokumenten unterschieden werden kann.

FR 2 554 122 A1 offenbart ein Wertdokument, bestehend aus Papier und/oder Kunststoff, mit einem Sicherheitselement, das zumindest ein erstes Lumineszenzsystem (A, siehe Seiten 22-23, und Formel (IV) auf Seite 7) und ein zweites Lumineszenzsystem (B, siehe Seiten 22-23, und Formel (X) auf Seiten 12-13) aufweist, welche eine im Wesentlichen gleiche, gemeinsame Emissionsbande aufweisen (S. 3 Z. 19-27), wobei zumindest das erste oder das zweite Lumineszenzsystem, oder beide Lumineszenzsysteme, mindestens eine Anregungsbande aufweisen (z.B. < 400 nm (S. 2 Z. 26-28) o. > 800 nm (S. 2 Z. 30-34), die nur bei dem ersten oder dem zweiten Lumineszenzsystem zu einer Emission bei der gemeinsamen Emissionsbande führt, wobei das erste Lumineszenzsystem aus einer Mischung von in geeignete Wirtsgitter eingesetzten Luminophoren (Ce und Tb, siehe S. 7 Z. 24-25) besteht, und wobei das zweite Lumineszenzsystem aus einem in einem geeigneten Wirtsgitter eingesetzen einzigen Luminophor (Er oder Ho oder Tm, siehe S. 13 Z. 24; Yb ist hier kein Luminophor sondern lediglich der Lichtempfänger, siehe auch Artikel, der auf Seite 12 Zeile 29 dieses Dokuments zitiert ist; Y, La, Lu und Gd sind hier auch keine Luminophore). US 2008/116272 A1 offenbart ein ähnliches Wertdokument wie in FR 2 554 122 A1, insbesondere die "Denomination 30" in "Table 4" in Absatz 212: da ist Yb auch kein Luminophor.

Ausgehend von diesem Stand der Technik liegt der Erfindung die Aufgabe zugrunde, Sicherheitselemente mit zumindest zwei lumineszierenden Substanzen anzugeben, die sich insbesondere als Echtheitskennzeichnung für Wertdokumente eignen, wobei die Sicherheitselemente eine noch höhere Sicherheit gegen Fälschungsversuche bieten sollen. Außerdem soll eine Erhöhung der Vielfalt unterscheidbarer Sicherheitselemente erreicht werden. Die Lösung dieser Aufgabe ergibt sich aus den unabhängigen Ansprüchen. Weiterbildungen sind Gegenstand der Unteransprüche.

Die Erfindung geht von einem Sicherheitselement mit zumindest zwei lumineszierenden Substanzen aus, wobei das Sicherheitselement eine erste und eine zweite lumineszierende Substanz aufweist, welche eine im Wesentlichen gleiche, gemeinsame Emissionsbande aufweisen, wobei zumindest die erste oder die zweite lumineszierende Substanz, oder beide lumineszierenden Substanzen, mindestens eine Anregungsbande aufweisen, die nur bei der ersten oder der zweiten lumineszierenden Substanz zu einer Emission bei der gemeinsamen Emissionsbande führt.

Die Erfindung weist den Vorteil auf, dass nunmehr auch lumineszierende Substanzen zusammen für die Absicherung eines Wertdokuments eingesetzt werden können, die zuvor anhand ihrer Emissionen nicht oder nicht sicher unterschieden werden konnten. Die unterschiedlichen Anregungsbanden erlauben bei gleicher Emissionsbande eine Unterscheidung der lumineszierenden Substanzen. Dadurch werden die zur Verfügung stehenden Möglichkeiten der Absicherung von Wertdokumenten wesentlich vergrößert. Dies erlaubt es eine Vielzahl zusätzlicher Codierungen vorzusehen. Außerdem wird durch die Tatsache, dass die lumineszierenden Substanzen nicht allein anhand ihrer Emissionen unterschieden werden können, die durch das die lumineszierenden Substanzen enthaltende Sicherheitselement bewirkte Absicherung wesentlich verbessert.

Besonders vorteilhaft kann das Sicherheitselement für die Absicherung und/ oder Codierung von Wertdokumenten eingesetzt werden. Beispielsweise durch Ein- und/ oder Aufbringung auf das Wertdokument oder durch Ein- oder Aufbringung auf Echtheitsmerkmale für Wertdokumente.

Eine Überprüfung des Vorliegens eines Sicherheitselements, eines Wertdokumentes oder eines Echtheitsmerkmals kann durch Anregen der lumineszierende Substanzen mit einer ersten Strahlung, die eine Wellenlänge aufweist, welche im Wesentlichen bei einer der Anregungsbanden liegt, die nur bei der ersten oder der zweiten lumineszierenden Substanz zu einer Emission bei der gemeinsamen Emissionsbande führt, bewirkt werden.

Diese Überprüfung durch Anregung bei unterschiedlichen Wellenlängen, die den unterschiedlichen Anregungsbanden der zusammen verwendeten lumineszierenden Substanzen entsprechen, erlaubt es, auch lumineszierende Substanzen voneinander unterscheiden zu können, die bisher als eine einzige lumineszierende Substanz wahrgenommen wurden, da sie eine gemeinsame Emissionsbande aufweisen.

Weitere Vorteile der vorliegenden Erfindung ergeben sich aus den abhängigen Ansprüchen sowie der nachfolgenden Beschreibung von Ausführungsformen anhand von Figuren.

Es zeigt:
- Figur 1: Anregungs- und Emissionsbanden von Sicherheitselementen, und
- Figur 2: Anregungs- und Emissionsbanden von weiteren Sicherheitselementen.

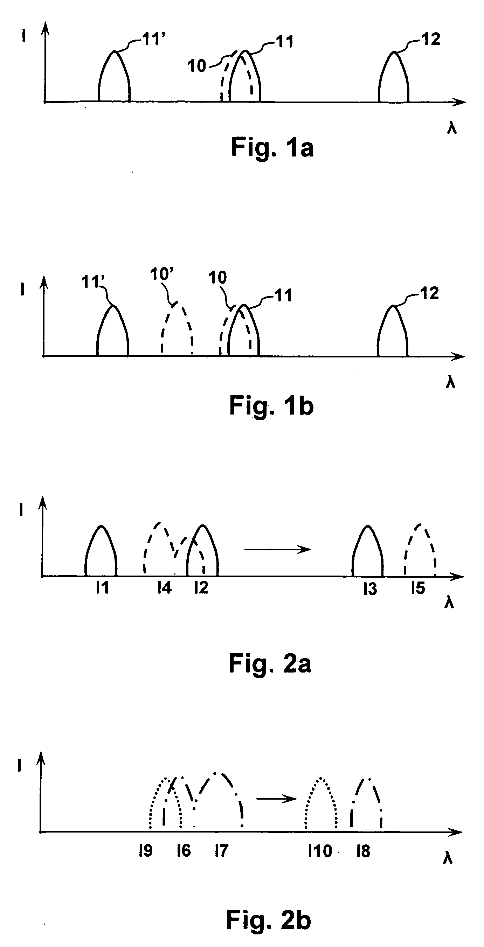

Die Figuren 1 und 2 helfen, die Erfindung zu verstehen.

Figur 1 zeigt Anregungs- und Emissionsbanden von Sicherheitselementen, die beispielsweise zur Absicherung von Wertdokumenten verwendet werden. Die Sicherheitselemente bestehen aus einer spezifischen Kombination von lumineszierenden Substanzen. Für das Sicherheitselement werden mindestens zwei unterschiedliche lumineszierende Substanzen für ein Wertdokument verwendet, z. B. gemeinsam auf bzw. in das Wertdokument eingebracht, insbesondere im Substrat (Papier und/ oder Kunststoff) mittels Planchetten, Fasern usw., so dass sie räumlich zumindest in Teilen überlappen, vorzugsweise beide überall wo sie vorliegen gemeinsam vorliegen, damit die Luminophore bei dem Versuch der messtechnischen Analyse wie ein gemeinsamer Luminophor erscheinen. Weitere Luminophore können vorhanden sein. Falls weitere Luminophore vorhanden sind, wird nachfolgend statt von mindestens zwei unterschiedlichen lumineszierenden Substanzen von mindestens zwei Lumineszenzsystemen gesprochen.

Die mindestens zwei Lumineszenzsysteme sind derart ausgewählt, dass sie mindestens eine gemeinsame Emission besitzen, d. h. bei (ggf. unterschiedlicher) Anregung bei mindestens einer gemeinsamen Wellenlänge emittieren. Dabei soll unter "gemeinsamer Wellenlänge/ gemeinsamer Emission" verstanden werden, dass eine spektrale Überlappung der Emissionsspektren der mindestens einen gemeinsamen Emission oder zumindest eine sehr nahe Emission (z. B. unmittelbar benachbart) auftritt, so dass die Emissionen mit Sensoren mit einer Auflösung von > 50nm insbesondere > 10nm als gemeinsame Emission erscheinen, d. h. nicht signifikant voneinander getrennt werden können.

Weiterhin kann die "gemeinsame Emission" für beide Luminophore eine ungefähr gleiche Linienbreite aufweisen, wobei die mindestens zwei Lumineszenzsysteme mindestens eine Wellenlänge besitzen, bei der sie nicht gemeinsam anregbar sind, d. h. entweder nur eines der beiden Lumineszenzsysteme anregbar ist (während bei den anderen Wellenlängen, bei denen die Lumineszenzsysteme anregbar sind, beide Lumineszenzsysteme anregbar sind) oder es für beide Lumineszenzsysteme zumindest jeweils eine Wellenlänge gibt, bei denen nur das jeweils eine Lumineszenzsystem anregbar ist, das andere nicht oder mit sehr viel geringerer Effizienz. Dabei soll unter "geringerer Effizienz" ein Faktor von weniger als 5, bevorzugt weniger als 10 verstanden werden. Dabei erzeugt die mindestens eine Wellenlänge in der gemeinsamen Emission bei Anregung ähnlicher Intensität ebenfalls ähnliche Intensität, die mit der der gemeinsamen oder anderen Anregung vergleichbar ist. Ähnliche Intensität bedeutet dabei, dass im Anregungsspektrum der gemeinsamen Emission die Höhen der beiden Anregungsbanden nicht mehr als um einen Faktor 10, bevorzugt nicht mehr als um einen Faktor 5, besonders bevorzugt nicht mehr als um einen Faktor 3, ganz besonders bevorzugt nicht mehr als um einen Faktor 2, noch viel mehr bevorzugt nicht mehr als um einen Faktor 1,07 verschieden sind.

Die Erfindung nutzt Energietransfersysteme aus, bei denen Energie von einem Sensitizer (Lichtempfänger) zu einem Luminophor übertragen wird. Somit sind Lichtempfänger keine Luminophore im Sinne der Erfindung.

Dies kann vollständig oder auch nur teilweise erfolgen. Die Erfindung nutzt die überraschende Erkenntnis, dass mit geeigneten Nachweismethoden auch Systeme genutzt werden können, die wegen Wechselwirkungen der Emissionen bisher nicht getrennt werden konnten und deshalb nicht einsetzbar waren.

Werden die Systeme unselektiv angeregt, so erhält man sowohl bei Anregung mit den Anregungswellenlängen des ersten Luminophors als auch bei der Anregung mit den Anregungswellenlängen des zweiten Luminophors eine (die) gemeinsame Lumineszenzemission (wenn auch aus den beiden unterschiedlichen Systemen heraus). Regt man hingegen bei der mindestens einer (bevorzugt den beiden unterschiedlichen individuellen) Wellenlängen an, bei denen jeweils nur der eine Luminophor anregbar ist, so erhält man isoliert die Emission aus nur einem der beiden Systeme.

In Figur 1a sind Intensitäten in Abhängigkeit von der Wellenlänge für einen ersten Luminophor dargestellt, der eine erste Anregungsbande 11 und eine zweite Anregungsbande 11' für die Emissionsbande 12 aufweist. Ein zweiter Luminophor weist nur eine Anregungsbande 10, ebenfalls für die Emissionsbande 12 auf, die nahezu identisch mit der Anregungsbande 11 des ersten Luminophors ist. Bei einer Anregung mit einer Strahlung mit einer Wellenlänge welche den Anregungsbanden 10,11 entspricht, können erster und zweiter Luminophor somit nicht unterschieden werden. Die Anregung mit einer Strahlung bei der zweiten Anregungsbande 11' ermöglicht es jedoch den ersten Luminophor vom zweiten Luminophor zu trennen.

In Figur 1b sind Intensitäten in Abhängigkeit von der Wellenlänge für einen ersten Luminophor dargestellt, der eine erste Anregungsbande 11 und eine zweite Anregungsbande 11' für die Emissionsbande 12 aufweist. Ein zweiter Luminophor weist nur eine Anregungsbande 10, ebenfalls für die Emissionsbande 12 auf, die nahezu identisch mit der Anregungsbande 11 des ersten Luminophors ist. Zusätzlich weist der zweite Luminophor eine zweite Anregungsbande 10' für die Emissionsbande 12 auf. Bei einer Anregung mit einer Strahlung mit einer Wellenlänge welche den Anregungsbanden 10,11 entspricht, können erster und zweiter Luminophor somit nicht unterschieden werden. Die Anregung mit einer Strahlung bei der zweiten Anregungsbande 11' des ersten Luminophors ermöglicht es jedoch den ersten Luminophor zu erkennen. Die Anregung mit einer Strahlung bei der zweiten Anregungsbande 10' des zweiten Luminophors ermöglicht es jedoch den zweiten Luminophor zu erkennen.

Die in den nachfolgenden Beispielen angegebenen Wellenlängen sind circa Angaben. Die tatsächlichen Werte werden durch die verwendete Matrix bzw. das verwendete Wirtsgitter bestimmt.

### Beispiel 1 (nicht beansprucht)

Lumineszenzsystem 1: Er:Matrix
Lumineszenzsystem 2: Yb, Tm: Matrix

Beide Lumineszenzsysteme emittieren bei 1 µm bei Anregung mit sichtbaren oder NIR Wellenlängen und können so über die Emission bei µm nicht getrennt werden. Sie können natürlich bei anderen Wellenlängen getrennt werden, jedoch bleibt dann die Unsicherheit der Intensität in der gemeinsamen Linie. Deshalb ist das Auswerten der gemeinsamen Linie erfindungsmaßgeblich.
Er: Matrix besitzt Anregung bei 520nm, 650nm und 800nm
Yb, Tm: Matrix besitzt gemeinsame Anregung bei 800nm, jedoch lässt sich das System ebenfalls bei 700nm anregen, bei der das System 1 keine Anregung besitzt.

Wird das Merkmalsystem (d. h. die Kombination von Lumineszenzsystem 1 und Lumineszenzsystem 2) in das Volumen der Banknote eingebracht (oder in eine Farbe), so zeigt das System bei allen Anregungen 520, 650, 700nm jeweils eine Emission bei 1µm. Wird das System bei 800nm angeregt, so beobachtet man ebenfalls eine Emission bei 1µm, die in diesem Fall jedoch von beiden Lumineszenzsystemen heraus entsteht.

### Beispiel 2 (nicht beansprucht)

Lumineszenzsystem 1: Tm: Matrix
Lumineszenzsystem 2: Yb, Tm: Matrix

Beide Lumineszenzsysteme emittieren bei 1.9µm. System 1 und 2 sind überall dort anregbar, wo Tm anregbar ist, z. B. bei 800nm. Jedoch ist das System 2 zusätzlich bei ca. 980nm anregbar.

Wird das Merkmalsystem (d. h. die Kombination von Lumineszenzsystem 1 und Lumineszenzsystem 2) in eine gemeinsame Farbe eingebracht, so emittieren sie bei Anregung in alle Tm-Banden aus beiden Systemen heraus. Nur bei Anregung mit ca. 980nm wird ausschließlich das Lumineszenzsystem 2 angeregt.

Besonders bevorzugt sind Merkmalsysteme, falls sie nur eine Emission aufweisen (oder nur eine wesentliche Emission).

Für die Erfindung sind prinzipiell alle Luminophore geeignet. Besonders bevorzugt sind Luminophore mit einer größeren Anzahl schmalbandiger Emissions- und/ oder Anregungsbanden. Besonders bevorzugt sind Seltenerdsysteme, d. h. mit Seltenerdionen als Luminophoren dotierte Wirtsgitter mit ihren schmalbandingen zahlreichen Linien. Im Folgenden werden diese Systeme Luminophor:Matrix genannt, wobei das Luminophor dabei in die Matrix bzw. in das Wirtsgitter eindotiert ist.

Besonders bevorzugt werden Stokes-verschobene Systeme verwendet, da diese mit hoher Effizienz verfügbar sind, d. h. niedrig dotiert werden können.

Die folgende Tabelle 1 gibt eine Übersicht über mögliche Systeme mit Emissionen im IR-Bereich. Das Prinzip kann ebenso auf Luminophore mit Emissionen im sichtbaren Spektralbereich angewendet werden.

**Tabelle 1**

| Ein Luminophor | Ein oder mehrere Luminophore |
|---|---|
| A, AB, ABC, AC, ACD, AED | AD |
| C, BC, CDE | CD, BCD |
| F, BF, CF, DF, DEF, BDF | |
| E, BE, DE, GE, CGE | |
| A, AB, AG | |
| E, IE, EGH | |
| AD, GI, EGJ | D, ED, GH |
| E, EI | |
| C, CJ, CH, FH | KH |

In der Tabelle 1 stehen die Buchstaben A bis K für Mengen von Luminophoren. Die in den Mengen A bis K enthaltenen Luminophore sind nachfolgend angegebenen:

| | | |
|---|---|---|
| A = {Ho} | B ∈ {Cr, Fe, Mn} | C = {Tm} |
| D ∈ {Yb, Er} | E = {Nd} | F = {Er} |
| G = {Yb} | H ∈ {Er, Tm} | I ∈ {Yb, Cr} |
| J ∈ {Ho, Tm} | K ∈ {Cr} | |

Ein Lumineszenzsystem ergibt sich durch die Auswahl eines oder mehrerer der Luminophore.

Für das erfindungsgemäße Merkmalsystem werden zwei (oder auch mehrere) der Lumineszenzsysteme eingesetzt. Beide Lumineszenzsysteme können entweder einzelne Luminophore sein (nicht beansprucht), oder erfindungsgemäß selbst wieder Mischungen von Luminophoren. Besonders bevorzugt weisen die Lumineszenzsysteme Luminophore einer Gruppe mit gleicher Emissionswellenlänge auf. Derartige Gruppen von unterschiedlichen Luminophoren mit gleichen Emissionswellenlängen sind jeweils in einer Zeile der Tabelle 1 zusammengestellt.

Die Luminophore sind in geeignete Wirtsgitter eingesetzt. Besonders bevorzugt sind anorganische Wirtsgitter, insbesondere wegen der Schmalbandigkeit der die Lumineszenz bestimmenden Spektrallinien.

Die Rolle der Matrix ist für die vorliegende Erfindung nicht ausschlaggebend. Sie kann aber zum fine-tuning der Anregungs- bzw. Emissionsbanden verwendet werden. Dies ist insbesondere relevant, wenn mit schmalbandigen Anregungsquellen (z. B. Lasern) angeregt wird. Dann können auch RE:Matrix A und (gleiches) RE:Matrix B verwendet werden.

Bevorzugt sind Matrizen aus der Familie der Granate, Perovskite, Sulfide, Oxysulfide, Apatite, Vanadate, Oxide, Gläser usw. geeignete Matrizen sind z. B. aus der WO 2006/024530 A1 bekannt.

### Beispiel 3 (beansprucht)

Lumineszenzsystem 1: Er, Yb: Matrix, Tm:YIG
Lumineszenzsystem 2: Yb, Ho: Matrix, gemischt mit Ho:YIG

Die Verwendung von Mischungen von Luminophoren als Lumineszenzsysteme ist insbesondere dann vorteilhaft, wenn die verschiedenen Lumineszenzsysteme (Lumineszenzsystem 1 und Lumineszenzsystem 2) unabhängig voneinander in das Wertdokument integriert werden, z. B. mit unterschiedlichen Regelschleifen oder aus unterschiedlichen Dosierstationen dosiert werden, oder unabhängig voneinander mit verschiedenen Qualitätssicherungs-Systemen in die Farbe integriert werden.

Denn dann variieren die beiden Lumineszenzsysteme (z. B. die Intensitäten der den beiden Lumineszenzsystemen zugehörenden Linien). Von Ort zu Ort der Banknote bzw. von Banknote zu Banknote einer BN-Serie (oder eines Produktionsloses) sind damit die beiden Lumineszenzsysteme, und insbesondere ihre Intensitäten, unabhängig voneinander und variieren unabhängig voneinander.

Ordnet man den Luminophoren in den Lumineszenzsystemen 1 und 2 definierte Intensitäten zu, also
Lumineszenzsystem 1: 111, 112
Lumineszenzsystem 2: I121, I22

für die jeweiligen Luminophore L11, L12, L21, L22 der Systeme, so gewinnt man zusätzlich Sicherheit im Gesamtsystem (bestehend aus Lumineszenzsystem 1 und Lumineszenzsystem 2), da das über die Pulvermischung des Lumineszenzsystems 2 eingestellte Intensitätsverhältnis I21/I22 (und / oder I11/I12) nur dann offenbart wird, wenn man mit der "richtigen" Wellenlänge für das Lumineszenzsystem 1 bzw. Lumineszenzsystem 2 anregt.

Diese Verhältnisse bleiben so nur der definierenden Stelle, z. B. einer Zentralbank, vorbehalten und könnten zur Authentisierung der BN verwendet werden.

Regt man bei einer Wellenlänge an, bei der beide Lumineszenzsysteme gemeinsam anregbar sind, d. h. das Lumineszenzsystem 1 antwortet auf die Anregung mit 111 und das Lumineszenzsystem 2 mit 121, so erhält man für die gemeinsame Linie beispielsweise eine Mischung aus (I11 + I21), die in keinem definierten Zusammenhang zu den Intensitäten I12 und I22 stehen muss, da die beiden Lumineszenzsysteme nur auf sich bezogen definierte Intensitätsverhältnisse haben, jedoch aufgrund ihrer i. a. unabhängigen Dosierung keine gemeinsame Intensitätsbasis.

Neben der Bezugnahme der Intensitäten zueinander können weiter Eigenschaften der Lumineszenzsysteme zur Authentisierung gemessen und in Bezug zueinander gesetzt werden.

Besondere Ausprägungen im Verfahren zur Authentisierung des Wertdokuments können auf unterschiedliche Weise erreicht werden.

Charakteristische Lumineszenzzeiten. Messung einer gemeinsamen, für das Wertdokument charakteristischen Lumineszenzzeit bei Anregung mit einer Wellenlänge, die beide Systeme anregt. Messung unterschiedlicher, für die individuellen Systeme Lumineszenzsystem 1 und Lumineszenzsystem 2 charakteristischen Lumineszenzzeiten bei Anregung in das jeweilige Subsystem. Die charakteristischen Lumineszenzzeiten können sowohl Ankling- als auch Abklingzeiten sein, wobei sich die Beleuchtungsdauern unterscheiden können und auf das jeweilige Subsystem angepasst sein können, oder auch gleich sein. Ebenso können über die Banknote unterschiedliche Beleuchtungszeiten verwendet werden, wobei die Abklingzeiten der gemeinsamen Emission mit Abklingzeiten von anderen Übergängen für die Bestimmung der Authentisierung in Bezug gesetzt werden können.

Intensitätsverhältnisse. Messung der gesamten Intensität der beiden Lumineszenzsysteme. Messung der einzelnen Intensitäten der beiden Lumineszenzsysteme durch Messung bei der ggf. gemeinsamen Anregung und in Bezugsetzen mit den Intensitäten der Teilsysteme (bei Anregung mittels der einen oder den mehreren individuellen Anregungen). Setzen all dieser Lumineszenzintensitäten in Bezug zueinander zur Authentisierung des Wertpapiers.

Spektrale Eigenschaften. Bei gemeinsamer Anregung zeigt die gemeinsame Emission die Überlagerung der Spektren der beiden Lumineszenzsysteme. Das Spektrum ist sowohl gegen das des Lumineszenzsystems 1 als auch gegenüber dem des Lumineszenzsystems 2 verändert, z. B. verbreitert, verschoben, in der Form verändert. Bei unterschiedlicher Anregung bzw. Anregbarkeit erhält man eine andere Spektralform. Auch die Spektralformen von einzelner / getrennter / gemeinsamer Anregung können für die Authentisierung in Bezug zueinander gesetzt werden.

Die genannten Unterschiede können auch dazu verwendet werden, um Kodierungen auszubilden, d.h. verschiedene Wertdokumente, die nach dem gleichen System aufgebaut sind, voneinander zu unterscheiden, z.B. Denominationen, Serien, etc.

In ein Wertdokument können die Lumineszenzsysteme auf unterschiedliche Weise eingebracht werden.

Eine Einbettung in das Wertdokument kann in das Substrat (Papier und/ oder Kunststoff), die Druckfarbe, in Echtheitsmerkmale (Sicherheitsfaden, Fasern, Planchetten usw.) erfolgen.

Die Einbringung der beiden Lumineszenzsysteme L1 und L2 kann mittels getrennter Qualitätssicherungssysteme mit unabhängigen Dosierstationen erfolgen.

Ein Prüfverfahren zur Überprüfung des Vorliegens eines Sicherheitselements mit mindestens zwei lumineszierenden Substanzen bzw. zwei Lumineszenzsystemen kann mittels eines Sensors oder mehrerer Sensoren erfolgen. Der oder die Sensoren werten die einzelnen Lumineszenzsysteme aus, z. B. dadurch, dass die ggf. mehrfachen Intensitäten der individuellen Lumineszenzsysteme ins Verhältnis gesetzt werden. Ebenso indem über unterschiedliche Wellenlängen 11 (gemeinsam anregbar) und/oder 12 (nur System 1) und/ oder 13 (nur System 2) angeregt wird. Wahlweise oder zusätzlich indem alternierend und/ oder gemeinsam die Wellenlängen 11,12 und 13 eingestrahlt werden. Weiterhin ist es möglich, räumlich verschieden anzuregen, z. B. eine Messspur mit 11, eine andere Messspur mit 12. Bei der Auswertung können alle denkbaren Eigenschaften, z. B. Lumineszenzzeiten, Intensitätsverhältnisse, spektrale Eigenschaften usw. berücksichtigt werden, z. B. zur Authentisierung eines Wertdokuments.

In Figur 2a sind Intensitäten in Abhängigkeit von der Wellenlänge für ein erstes Lumineszenzsystem 1 dargestellt. In Figur 2b sind Intensitäten in Abhängigkeit von der Wellenlänge für ein zweites Lumineszenzsystem 2 dargestellt.

Lumineszenzsystem 1 besteht aus zwei Luminophoren. Ein mit durchgezogenen Linien dargestellter erster Luminophor absorbiert bei 11 und 12 und emittiert bei 13 und ggf. weiteren, nicht dargestellten Wellenlängen. Ein mit gestrichelten Linien dargestellter zweiter Luminophor absorbiert beispielsweise bei 14 und 12 und emittiert bei 15.

Lumineszenzsystem 2 besteht aus ebenfalls aus zwei Luminophoren. Ein mit strichpunktierten Linien dargestellter dritter Luminophor absorbiert bei 16 und 17 und emittiert bei 18 und ggf. weiteren, nicht dargestellten Wellenlängen. Ein mit gepunkteten Linien dargestellter vierter Luminophor absorbiert bei 19, im Beispiel gleich mit 16, und emittiert bei 110.

Wird mit einer Wellenlänge 12 ungefähr gleich 17 angeregt, so emittiert sowohl Lumineszenzsystem 1 bei 13 (und 15) als auch Lumineszenzsystem 2 (bei 18). Die Emissionen bei 13 und 18 überlappen miteinander, d. h. können in einem Sensor nicht voneinander getrennt werden. Entsprechend erhält man ein überlagertes Spektrum aus durchgezogener und strichpunktierter Kurve, die sowohl spektral als auch hinsichtlich ihrer charakteristischen Form, Lumineszenzzeiten, Intensitäten von den Einzellinien verschieden ist.

Wird mit einer Wellenlänge 16 angeregt, so erhält man von den überlappenden Banden 13,18 nur die Bande 18 (nebst charakteristischer Physik) des Lumineszenzsystems 2. Wird mit einer Wellenlänge 11 angeregt, so erhält man nur die Bande 13 (nebst charakteristischer Physik) des Lumineszenzsystems 1. Dies zeigt, dass man nicht immer mit einer Wellenlänge ein gesamtes Lumineszenzsystem (hier 1 und 2) anregen muss.

Man kann nun die beiden Lumineszenzsysteme (1 und 2) so einstellen, dass die Spektralform, Intensitäten, Abklingzeiten etc. des Lumineszenzsystems 1 (d. h. gestrichelte und durchgezogene Kurven) als auch die des Lumineszenzsystems 2 (gepunktete und strichpunktierte Kurven) in Bezug zueinander stehen. Dies bedeutet, dass es für die Authentisierung, also z. B. die Erkennung als gültiges Wertdokument, eine oder mehrere Gesetzmäßigkeiten gibt, die in den Parametern einzuhalten sind.

Für einen Fälscher ergibt sich daher das Problem, dass er nicht weiß, bei welchen Wellenlängen die entsprechenden Werte zueinander in Bezug gesetzt wurden. Dies erhöht die Absicherung der Echtheit erheblich. Dies gilt insbesondere dann, wenn die beiden Lumineszenzsysteme 1 und 2 unabhängig voneinander in bzw. auf das Wertdokument gebracht werden.

Nachfolgend wird der Aufbau von Sensoren beschrieben. Diese können sowohl in einer automatischen Prüfmaschine verwendet werden, in der zu prüfende Wertdokumente an den Sensoren vorbei bewegt werden, als auch in einem Handgerät.

Verwendung von zwei unabhängigen Sensoren, die nicht in Bezug zueinander stehen. Jeder Sensor misst für sich sein eigenes Lumineszenzsystem. Hierzu regt er zumindest bei den Wellenlängen an (und weist bei den Wellenlängen nach), die das eigene Lumineszenzsystem isolieren. Besonders bevorzugt weist, zumindest einer der Sensoren, zudem auch mit einer Anregung nach, die beide Lumineszenzsysteme anregt und setzt diese Information für die Authentisierung des Wertdokuments ein, z. B. indem das Intensitätsverhältnis von eigener Linie und gemeinsamer Linie gebildet wird, wobei das Intensitätsverhältnis in Bezug zu dem bekannten, erwarteten Intensitätsverhältnis des einzelnen oder beider Lumineszenzsysteme gesetzt wird. Es können alle physikalischen Charakteristika, insbesondere Lumineszenzzeiten, Intensitäten, Spektren, Spektralformen usw., ausgenutzt werden.

Verwendung eines unabhängigen Sensors und ein Kombi-Sensor. Der unabhängige Sensor misst ausschließlich sein Lumineszenzsystem (wie unabhängige Sensoren). Dabei kann der Sensor das zweite System zwar feststellen, jedoch wertet er keine weitere Information über das zweite System aus. Der Kombi-Sensor sind oder werden, z. B. aus statistischen Auswertungen, Informationen über beide Lumineszenzsysteme gespeichert oder werden beschafft. Diese Informationen werden zur Authentisierung des Wertdokuments verwendet. Es können alle physikalischen Charakteristika, insbesondere Lumineszenzzeiten, Intensitäten, Spektren, Spektralformen usw., ausgenutzt werden.

Verwendung eines Multisensors. Es wird nur ein Sensor verwendet, der alle beschriebenen Eigenschaften beider Lumineszenzsysteme messen kann (aber nicht muss). D. h. der Sensor regt beide Lumineszenzsysteme getrennt oder gemeinsam an und wertet aus. Es können alle physikalischen Charakteristika, insbesondere Lumineszenzzeiten, Intensitäten, Spektren, Spektralformen usw., ausgenutzt werden.

Es kann nicht nur die gemeinsame Emission nachgewiesen werden. Darüber hinaus können zur Erhöhung der Sicherheit auch zusätzliche Emissions- und/ oder Anregungslinien der Lumineszenzsysteme nachgewiesen werden.

Es werden im Folgenden mehrere Authentisierungen beschrieben. Die Authentisierungen werden in Sensoren realisiert. Besonders bevorzugt ist, wenn sich Sensoren z. B. in verschiedenen Bearbeitungsstufen in einer Authentisierungsebene oder über Authentisierungsebenen unterscheiden. Denn dann wird es für den Fälscher schwieriger, die Funktionsweise des Sensors zu analysieren. Bevorzugt werden mehrere dieser Authentisierungen in einem Sensor integriert. Von Vorteil ist dies insbesondere dadurch, dass verschiedene Authentisierungen (hier z. B. Intensitäten) miteinander in Bezug gesetzt werden können, um zum Authentisierungsergebnis zu kommen. Unter "Bezug" soll dabei verstanden werden, dass Intensitätsbänder, - verhältnisse, -Schwellen, Bereiche, Positiv- und Negativnachweise (mit Schwellen) und andere verglichen werden. Die nachfolgende Tabelle 2 enthält eine verallgemeinerte Darstellung des obigen Beispiels.

**Tabelle 2**

| | | Anregungen | | | | | | | | | Emissionen | | | | | | | |
|---|---|---|---|---|---|---|---|---|---|---|---|---|---|---|---|---|---|---|
| | | LS1 | | | | LS2 | | | | Lumineszenzsystem | LS1 | | | | LS2 | | | |
| | | LS11 | | LS12 | | LS21 | | LS22 | | Luminophor | LS11 | | LS12 | | LS21 | | LS22 | |
| Name | Nachweis | 1 | 2 | 3 | 4 | 5 | 6 | 7 | 8 | Wellenlänge/ Bande | A | b | c | d | A | f | g | h |
| Authentisierung 1 | selektiv LS11 | x | | opt | | na | na | opt | | | e | opt | opt | opt | / | / | opt | opt |
| Authentisierung 2 | LS11/ LS21 gemeinsam | | x | opt | | x | | opt | | | e | opt | opt | opt | e | opt | opt | opt |
| Authentisierung 3 | selektiv LS21 | na | na | opt | | x | | opt | | | / | / | opt | opt | e | opt | opt | opt |
| | | | | | | | | | | | | | | | | | | |
| Authentisierung 4 | selektiv LS12 | | opt | x | | | opt | | opt | | opt | opt | e | opt | opt | opt | opt | opt |
| Authentisierung 5 | selektiv LS22 | | opt | | opt | | opt | x | | | opt | opt | opt | opt | opt | opt | e | opt |
| | | | | | | | | | | | | | | | | | | |
| Authentisierung 6 | LS1 komplett | x | zus | x | zus | / | / | | opt | | e | opt | e | opt | / | / | opt | opt |
| Authentisierung 7 | LS2 komplett | / | / | | opt | x | zus | x | zus | | / | / | opt | opt | e | opt | opt | opt |
| Authentisierung 8 | LS1 und LS2 komplett | x-1 | opt | x | opt | x-2 | opt | x | opt | | e-1 | opt | e | opt | e-2 | opt | e | opt |

Es bedeutet:
- x: ist dort anregbar
- opt.: ist optional anregbar
- n.a.: ist nicht anregbar
- /: zeigt keine Emission
- e: wird dort nachgewiesen
- zus.: zeitlich / räumliche getrennte zusätzlich Anregung
- x-1, x-2: zeitlich oder räumlich getrennt
- e-1: Emission bei Anregung von x-1
- e-2: Emission bei Anregung von x-2

### Beispiel der Lesart (Authentisierung 1):

Lumineszenzsystem LS1 besteht aus den Luminophoren LS11 und LS12.
Lumineszenzsystem LS2 besteht aus den Luminophoren LS21 und LS22.

Bei Lumineszenzsystem LS1 gilt: Luminophor LS11 ist bei den Anregungswellenlängen 1 und 2 anregbar (und ggf. noch bei weiteren). Dabei ist der Begriff "Wellenlängen" oder "Anregungswellenlängen" wie "Anregungsbanden" zu verstehen. Luminophor LS12 ist bei den Anregungsbanden 3 und 4 anregbar (und ggf. noch bei weiteren). Wird Luminophor LS11 angeregt, so zeigt es die Emissionsbanden A und b (und ggf. noch weitere). Wird Luminophor LS12 angeregt, so zeigt es die Emissionsbanden c und d (und ggf. noch weitere). Entsprechendes gilt für Lumineszenzsystem LS2.

Bei der Authentisierung 1 wird in die Bande 1 von LS1 eingestrahlt ("x"), bei der LS2 keine Anregung besitzt (deshalb 2x "n.a."). Wird in die Bande 1 von LS1 eingestrahlt, so emittiert dieses mit der Emissionsbande A ("e" in der Tabelle). LS21 wird aber bei dieser erfindungsgemäßen Wellenlänge gerade nicht angeregt und zeigt deshalb keine Emission (insbes. nicht bei Emissionsbande A).

Gleichzeitige Anregung von LS12: optional kann die Anregung in Bande 1 von LS11 auch LS12 anregen (in dessen Bande 3). Dann emittiert auch LS12 mit seinen Banden c und d.

Gleichzeitige Anregung von LS22: optional kann die Anregung in Bande 1 von LS11 auch LS22 (in dessen Bande 7) anregen. Dann emittiert auch LS22 mit seinen Banden g und h.

Zeitlich versetzte oder räumlich versetzte Anregung von L12 oder L22 mit 2. Anregungswellenlänge: optional kann die Authentisierung auch mittels einer weiteren Wellenlänge erfolgen, die LS12 bei Bande 3 und/oder LS22 bei Bande 7 anregt, jedoch nicht LS21. Dies wäre der Fall einer zeitl. alternierenden und / oder räumlich versetzten 2. Anregung. Soll heißen: Bande 3 von LS12 kann, muss aber nicht bei der gleichen Wellenlänge liegen wie Bande 1 von LS11.

### Beispiel 4 (beansprucht)

Merkmalssystem aus Lumineszenzsystem 1 und Lumineszenzsystem 2:
Lumineszenzsystem 1: LS11: Er:La2O2S, LS12: Mn:Li3PO4
Lumineszenzsystem 2: LS21: Nd,Yb:Y2O2S, LS22: Yb,Tm:YVO4

Die Konzentration an Tm wird dabei in Yb, Tm so klein gewählt, dass es im Sichtbaren und nahen Infrarot keine wesentliche Anregung besitzt, d.h. im Anregungsspektrum bei 1µm weniger als 10% der Anregungsintensität der Systeme LS11 und LS21 besitzt. Das Merkmalsystem wird in das Wertdokument integriert, indem Lumineszenzsystem 1 und Lumineszenzsystem 2 voneinander unabhängig (aber gleichzeitig) in das Volumen des Wertdokuments eingebracht werden. Dazu werden die Merkmale z. B. dispergiert und die Dispersionen homogen der Pulpe bei der Papierherstellung zugefügt. Beide Lumineszenzsysteme werden durch geeignete, voneinander unabhängige Qualitätskontrollgeräte überwacht, so dass ihre Zielintensitäten mit den Spezifikationen übereinstimmen.

Für die Authentisierung des Wertdokuments stehen Sensoren zur Verfügung, die z. B. in Banknotenbearbeitungsmaschinen integriert werden. Die Sensoren können auch unabhängig von Banknotenbearbeitungsmaschinen als Handgeräte etc. ausgeführt sein.

### Authentisierung 1 (für LS11)

Anregung bei 650nm (da hier LS11 aber nicht LS21 anregbar ist) und Detektion von LS11 bei einer Wellenlänge von ca. 1µm. Optional detektiert der Sensor LS11 zusätzlich bei einer Wellenlänge von 1.5 µm und setzt diese Intensität zur Intensität bei ca.1 µm in Bezug zueinander. Optional detektiert der Sensor Mn:Li3PO4 bei dessen Emissionswellenlänge und setzt diese Intensität zur Intensität bei ca. 1 µm in Bezug zueinander.

### Authentisierung 2 (Kombination LS11 und LS21)

Anregung bei 520nm an (da hier sowohl LS11 als auch LS21 anregbar sind) und Detektion. Kombination aus LS11 und LS21 bei einer Wellenlänge von ca.1 µm. Optional Detektion von LS11 zusätzlich bei einer Wellenlänge von 1.5 µm und setzt diese Intensität zu einer anderen gemessenen Intensität von LS1 und/oder LS2 (oder Kombination beider) in Bezug zueinander.

### Authentisierung 3 (für LS21)

Anregung bei 584 nm an (da hier LS21 aber nicht LS12 anregbar ist und Detektion LS21 bei einer Wellenlänge von ca.1 µm.

### Authentisierung 7 (für LS21 und LS22)

Anregung bei 580 nm an (da hier LS21 anregbar ist, während LS11 nicht anregbar ist) und Detektion LS21 bei einer Wellenlänge von ca.1 µm. Anregung kann zeitlich oder räumlich versetzt sein bei ca. 0.95 µm an (da hier LS22 anregbar ist) und Detektion LS22 bei einer Wellenlänge von ca. 1.8 µm. Die Intensitäten werden miteinander in Bezug gesetzt.

### Authentisierung 6 (für LS11 und LS12)

Anregung bei 660 nm an (da hier LS11 und LS12 anregbar sind, jedoch LS21 keine Anregung zeigt) und Detektion LS11 bei einer Wellenlänge von ca.1 µm. Optional LS11 zusätzlich bei einer Wellenlänge von 1.5 µm. LS12 bei einer Wellenlänge von ca. 1.2 µm. Die Intensitäten werden in Bezug zueinander gesetzt und werden beispielsweise auf die bekannten Intensitätsverhältnisse überprüft.

### Authentisierung 8 (für LS1 und opt. LS2)

Anregung bei ca.1 µm an (da hier alle Systeme anregbar sind) und Detektion. Mischung von LS11, LS21, LS22 bei einer Wellenlänge von ca. 1 µm. LS11 bei einer Wellenlänge von ca. 1.5 µm. LS12 bei einer Wellenlänge von ca.1.2 µm. LS22 bei einer Wellenlänge von ca. 1.8 µm. Die Intensitäten werden in Bezug zueinander gesetzt und beispielsweise auf die bekannten Intensitätsverhältnisse überprüft.

Optional messen alle Authentisierungen alternativ oder zusätzlich charakteristische Lumineszenzzeiten und/ oder Spektren durch Spektralanalyse bzw. Formanalyse des Spektrums. D. h. statt der Intensität, könnte als Authentisierungskriterium auch die charakteristische Lumineszenzzeit, Spektralform usw. überprüft werden.

In einer bevorzugten Ausgestaltung setzt man zwei voneinander unabhängige Sensoren zur Authentisierung ein, die die Authentisierungen 6 und 7 durchführen. Auf diese Weise werden die beiden Lumineszenzsysteme 1 und 2 voneinander unabhängig betrieben, sie überlagern sich aber in einer gemeinsamen Linie, um es dem Fälscher drastisch zu erschweren, die systeminternen Zusammenhänge zu erkennen. Die Sensoren bewerten erfindungsgemäß die beiden Lumineszenzsysteme unabhängig voneinander. Optional bewerten sie zudem mindestens auch die Existenz des zweiten Lumineszenzsystems.

In einer weiteren bevorzugten Ausgestaltung führt man die Authentisierungen 1 und 2 durch. Auf diese Weise wird Lumineszenzsystem 1 unabhängig nachgewiesen und der zum Lumineszenzsystem 2 gehörende Sensor führt eine Bewertung von Lumineszenzsystem 2 derart aus, dass er bei den aufgenommenen Daten seine, nur ihm bekannten systeminternen Kenntnissen von Lumineszenzsystem 2 berücksichtigt.

In einer besonders bevorzugten Ausgestaltung gibt es zumindest z. B. in der Zentralbank einen Master-Sensor, der die Authentisierungen 6, 7 in einem Sensor vereint. Er kann damit nicht nur die Beziehungen jedes einzelnen Lumineszenzsystems zur Authentisierung ausnutzen sondern zudem eine bekannte Beziehung [oder das Vorliegen keiner definierten Beziehung] zwischen den Systemen prüfen. In einer besonders bevorzugten Ausgestaltung setzt man hierzu einen Sensor ein, der mit mehreren Anregungsquellen (wellenlängen) beleuchtet und die Antwort des Merkmalsystems spektroskopisch in vielen Kanälen erfasst. Die spektroskopische Lösung kann dabei über ein Spektrometer, durchstimmbare Filter, Verlaufsfilter, mehrere diskrete Filterkanäle oder Kombinationen hiervon gelöst werden.

Die Authentisierung der Banknote kann dabei mehrstufig verlaufen, wie oben beschrieben.

Das beschriebene Sicherheitselement kann zur Überprüfung der Echtheit der das Sicherheitselement aufweisende Gegenstände verwendet werden. Das Sicherheitselement kann aber stattdessen oder zusätzlich eine Codierung darstellen. Bei Banknoten kann die Codierung beispielsweise die Währung und/oder die Denomination der Banknoten kennzeichnen. Ebenso kann die Codierung eine Aussage über die Serie der Banknoten beinhalten.
pisch in vielen Kanälen erfasst. Die spektroskopische Lösung kann dabei über ein Spektrometer, durchstimmbare Filter, Verlaufsfilter, mehrere diskrete Filterkanäle oder Kombinationen hiervon gelöst werden.

Die Authentisierung der Banknote kann dabei mehrstufig verlaufen, wie oben beschrieben.

Das beschriebene Sicherheitselement kann zur Überprüfung der Echtheit der das Sicherheitselement aufweisende Gegenstände verwendet werden. Das Sicherheitselement kann aber stattdessen oder zusätzlich eine Codierung darstellen. Bei Banknoten kann die Codierung beispielsweise die Währung und/ oder die Denomination der Banknoten kennzeichnen. Ebenso kann die Codierung eine Aussage über die Serie der Banknoten beinhalten.

## Patentansprüche

1. Wertdokument, bestehend aus Papier und/ oder Kunststoff, mit einem Sicherheitselement, das zumindest ein erstes Lumineszenzsystem und ein zweites Lumineszenzsystem aufweist, welche eine im Wesentlichen gleiche, gemeinsame Emissionsbande aufweisen, wobei zumindest das erste oder das zweite Lumineszenzsystem, oder beide Lumineszenzsysteme, mindestens eine Anregungsbande aufweisen, die nur bei dem ersten oder dem zweiten Lumineszenzsystem zu einer Emission bei der gemeinsamen Emissionsbande führt, wobei beide Lumineszenzsysteme aus einer Mischung von in geeignete Wirtsgitter eingesetzten Luminophoren bestehen, und wobei die verschiedenen Lumineszenzsysteme unabhängig voneinander in das Wertdokument integriert sind.

2. Wertdokument nach Anspruch 1, wobei das erste und das zweite Lumineszenzsystem eine im Wesentlichen gleiche, gemeinsame Anregungsbande für die gemeinsame Emissionsbande aufweisen.

3. Wertdokument nach Anspruch 1 oder 2, wobei das erste und das zweite Lumineszenzsystem eine vollständige oder teilweise räumliche Überlappung aufweisen.

4. Wertdokument nach einem der Ansprüche 1 bis 3, wobei das Sicherheitselement weitere lumineszierende Substanzen aufweist.

5. Wertdokument nach einem der Ansprüche 1 bis 4, wobei das Sicherheitselement in das Volumen des Wertdokuments eingebracht und/ oder auf das Wertdokument aufgebracht ist.

6. Wertdokument nach einem der Ansprüche 1 bis 5, wobei das Sicherheitselement als unsichtbare, zumindest teilweise Beschichtung auf das Wertdokument aufgebracht ist.

7. Wertdokument nach einem der Ansprüche 1 bis 6, wobei das Sicherheitselement einer Druckfarbe zugemischt ist.

8. Wertdokument nach einem der Ansprüche 1 bis 7, wobei die lumineszierende Substanz mit mindestens einem anderen Echtheitsmerkmal kombiniert wird.

9. Wertdokument nach einem der Ansprüche 1 bis 4, das zusätzlich ein Trägermaterial aufweist, wobei das Sicherheitselement in dem Trägermaterial eingebettet und/oder auf das Trägermaterial aufgebracht ist.

10. Wertdokument nach Anspruch 9, wobei das Trägermaterial die Form eines Streifens eines Bandes oder einer Flüssigkeit aufweist.

11. Wertdokument nach Anspruch 9 oder 10, wobei das Trägermaterial als Sicherheitsfaden, Planchette, Melierfaser, Etikett oder Farbe ausgebildet ist.

12. Verfahren zur Herstellung eines Wertdokuments nach einem der Ansprüche 1 bis 11, wobei das Sicherheitselement einer Druckfarbe zugesetzt wird, und das Wertdokument oder das Trägermaterial mit dieser Farbe bedruckt werden.

13. Verfahren zur Herstellung eines Wertdokuments nach wenigstens einem der Ansprüche 1 bis 11, wobei das Sicherheitselement durch einen Beschichtungsprozess aufgetragen wird.

14. Verfahren zur Herstellung eines Wertdokuments nach wenigstens einem der Ansprüche 1 bis 11, wobei das Sicherheitselement in das Volumen des Wertdokuments oder des Trägermaterials eingearbeitet wird.

15. Prüfverfahren zur Überprüfung des Vorliegens eines Wertdokuments nach einem der Ansprüche 1 bis 11 mit folgenden Schritten:
Anregen der Lumineszenzsysteme des Wertdokuments nach einem der Ansprüche 1 bis 11 mit einer ersten Strahlung, die eine Wellenlänge aufweist, welche im Wesentlichen bei einer der Anregungsbanden liegt, die nur bei dem ersten oder dem zweiten Lumineszenzsystem zu einer Emission bei der gemeinsamen Emissionsbande führt.

16. Prüfverfahren nach Anspruch 15, wobei das Vorliegen des Wertdokumentes erkannt wird, falls eine Emission bei der gemeinsamen Emissionsbande bei Anregung mit der ersten Strahlung auftritt.

17. Prüfverfahren nach Anspruch 15 oder 16, wobei eine zweite Strahlung zur Anregung der Lumineszenzsysteme verwendet wird, welche bei einer der Anregungsbanden der ersten oder zweiten lumineszierenden Substanz liegt, die nicht von der ersten Strahlung angeregt wird.

## Claims

1. A value document consisting of paper and/or plastic, with a security element comprising at least one first luminescent system and one second luminescent system which have substantially identical joint emission bands, wherein at least the first or the second luminescent system or both luminescent systems, have at least one excitation band that leads to an emission at the joint emission band only in the first or the second luminescent substance, wherein both luminescent systems consist of a mixture of luminophores inserted in suitable host lattices, and wherein the different luminescent systems are integrated in the value document independently of each other.

2. The value document according to claim 1, wherein the first and the second luminescent system have a substantially identical joint excitation band for the joint emission band.

3. The value document according to claim 1 or 2, wherein the first and the second luminescent system have a complete or partial spatial overlap.

4. The value document according to any of the claims 1 to 3, wherein the security element comprises further luminescent substances.

5. The value document according to any of the claims 1 to 4, wherein the security element is incorporated into the volume of the value document and/or applied to the value document.

6. The value document according to any of the claims 1 to 5, wherein the security element is applied to the value document as an invisible, at least partial coating.

7. The value document according to any of the claims 1 to 6, wherein the security element is admixed to a printing ink.

8. The value document according to any of the claims 1 to 7, wherein the luminescent substance is combined with at least one other authentication feature.

9. The value document according to any of the claims 1 to 4, which additionally has a carrier material, wherein the security element is embedded in the carrier material and/or applied to the carrier material.

10. The value document according to claim 9, wherein the carrier material has the form of a strip, a band or a liquid.

11. The value document according to claim 9 or 10, wherein the carrier material is configured as a security thread, planchet, mottling fiber, label or color.

12. A method for manufacturing a value document according to any of the claims 1 to 11, wherein the security element is admixed to a printing ink, and the value document or the carrier material are printed with said ink.

13. A method for manufacturing a value document according to at least one of claims 1 to 11, wherein the security element is applied by a coating process.

14. A method for manufacturing a value document according to at least one of claims 1 to 11, wherein the security element is incorporated into the volume of the value document or of the carrier material.

15. A checking method for verifying the presence of a value document according to any of the claims 1 to 11, with the following steps:
exciting the luminescent systems of the value document according to any of the claims 1 to 11 with a first radiation which has a wavelength lying substantially at one of the excitation bands that leads to an emission at the joint emission band only in the first or the second luminescent system.

16. The checking method according to claim 15, wherein the presence of the value document is recognized if an emission occurs at the joint emission band upon excitation with the first radiation.

17. The checking method according to claim 15 or 16, wherein, for exciting the luminescent systems, a second radiation is employed which lies at one of the excitation bands of the first or second luminescent substance which is not excited by the first radiation.

## Revendications

1. Document de valeur consistant en du papier et/ou en de la matière plastique, comprenant un élément de sécurité comportant au moins un premier système de luminescence et un deuxième système de luminescence qui présentent une bande d'émission commune essentiellement égale, au moins le premier ou le deuxième système de luminescence ou les deux systèmes de luminescence présentant au moins une bande d'excitation qui ne conduit que dans le premier ou dans le deuxième système de luminescence à une émission dans la bande d'émission commune, les deux systèmes de luminescence consistant en un mélange de luminophores insérés dans des réseaux hôtes appropriés, et les différents systèmes de luminescence étant intégrés indépendamment les uns des autres dans le document de valeur.

2. Document de valeur selon la revendication 1, le premier et le deuxième système de luminescence présentant une bande d'excitation commune essentiellement égale pour la bande d'émission commune.

3. Document de valeur selon la revendication 1 ou 2, le premier et le deuxième système de luminescence présentant un chevauchement spatial complet ou partiel.

4. Document de valeur selon une des revendications de 1 à 3, l'élément de sécurité comportant d'autres substances luminescentes.

5. Document de valeur selon une des revendications de 1 à 4, l'élément de sécurité étant incorporé dans le volume du document de valeur et/ou appliqué sur le document de valeur.

6. Document de valeur selon une des revendications de 1 à 5, l'élément de sécurité étant appliqué sur le document de valeur sous forme de revêtement invisible au moins partiel.

7. Document de valeur selon une des revendications de 1 à 6, l'élément de sécurité étant ajouté à une encre d'impression.

8. Document de valeur selon une des revendications de 1 à 7, la substance luminescente étant combinée avec au moins une autre caractéristique d'authenticité.

9. Document de valeur selon une des revendications de 1 à 4, lequel comporte en outre un matériau support, l'élément de sécurité étant encastré dans le matériau support et/ou appliqué sur le matériau support.

10. Document de valeur selon la revendication 9, le matériau support présentant la forme d'un ruban, d'une bande ou d'un liquide.

11. Document de valeur selon la revendication 9 ou 10, le matériau support étant réalisé en tant que fil de sécurité, planchette, fibre chinée, étiquette ou encre.

12. Procédé de fabrication d'un document de valeur selon une des revendications de 1 à 11, l'élément de sécurité étant rajouté à une encre d'impression, et le document de valeur ou le matériau support étant imprimé avec cette encre.

13. Procédé de fabrication d'un document de valeur selon au moins une des revendications de 1 à 11, l'élément de sécurité étant enduit par un processus de revêtement.

14. Procédé de fabrication d'un document de valeur selon au moins une des revendications de 1 à 11, l'élément de sécurité étant mis en place dans le volume du document de valeur ou du matériau support.

15. Procédé de vérification de la présence d'un document de valeur selon une des revendications de 1 à 11, comprenant les étapes suivantes:
excitation des systèmes de luminescence du document de valeur selon une des revendications de 1 à 11 avec un premier rayonnement qui présente une longueur d'onde située essentiellement dans une des bandes d'excitation ne conduisant que dans le premier ou dans le deuxième système de luminescence à une émission dans la bande d'émission commune.

16. Procédé de vérification selon la revendication 15, la présence du document de valeur étant reconnue dans le cas où une émission dans la bande d'émission commune survient lors d'une excitation avec le premier rayonnement.

17. Procédé de vérification selon la revendication 15 ou 16, un deuxième rayonnement étant utilisé pour l'excitation des systèmes de luminescence, lequel se situe dans une des bandes d'excitation de la première ou deuxième substance luminescente non excitée par le premier rayonnement.
